# EUROPEAN PATENT SPECIFICATION

(11) **EP 4 252 948 B1**
(45) Date of publication and mention of the grant of the patent: **23.09.2026**
(21) Application number: 22165981.6
(22) Date of filing: 31.03.2022
(51) Int. Cl.: B23F 21/04, B23F 21/28, B23F 5/16, B23F 21/06, B23F 21/10

(54) **POWER SKIVING TOOL AND RE-GRINDABLE CUTTING INSERT THEREFOR**
WÄLZSCHÄLWERKZEUG UND NACHSCHLEIFBARER SCHNEIDEINSATZ DAFÜR
OUTIL DE TAILLAGE D'ENGRANGE PAR DÉVELOPPANTE ET SON INSERT DE DÉCOUPE POUVANT ÊTRE MEULÉ DE NOUVEAU

(43) Date of publication of application: 04.10.2023
(73) Proprietor: AB Sandvik Coromant, 811 81 Sandviken (SE)
(72) Inventor: SJÖÖ, Sture, 811 81 SANDVIKEN (SE)
(74) Representative: Sandvik

(56) References cited:
- EP-A2- 2 845 675
- US-A1- 2010 003 090
- US-A1- 2014 010 606
- US-A1- 2019 366 455
- US-A1- 2020 189 015

## Description

### TECHNICAL FIELD

The invention relates to a cutting insert for a power skiving tool, according to the preamble of claim 1, and more particularly to a cutting insert for power skiving tools used for gear machining, including machining of teeth or splines in metal workpieces. The invention also relates to a power skiving tool body arranged to accommodate such a cutting insert.

### BACKGROUND ART

Power skiving is a denomination of a chip removing machining method, which makes use of a combination of rotary and rectilinear relative motions between a milling tool and a workpiece. Above all, the method is used in connection with the forming of teeth, splines, and the like, and allows internal as well as external machining. The method as such is known since long and offers considerable advantages in comparison with traditional tooth-forming methods of the type that makes use of chip removing gear shaping and that is based on a cutting member being brought rectilinearly to and fro in order to, layer by layer, cut away material while forming a slot, which finally forms a gash of a full depth.

In contrast to such gear shaping, power skiving only requires a minimum of tool readjustments in that the tool during a planetary relative motion in relation to the workpiece is kept in constant rotation in order to remove, from each gash to be made, only one fragmentary chip, at the same time as the tool is given a rectilinear axial feeding motion. In such a way, all gashes are machined to a certain, per se moderate, depth before the tool needs to be readjusted for providing an increased radial feeding.

Power skiving tools using exchangeable cutting inserts are previously known. An example of such a power skiving tool is disclosed in EP2845675A2 and US2020/189015A1. As for any cutting inserts used for metal cutting, the tool life of a power skiving cutting insert is limited. Even if the use of exchangeable cutting inserts is cost-effective, since only the cutting inserts need to be discarded when cutting edges are damaged, the cutting inserts are still expensive, in particular if made of cemented carbide and of big dimensions, e.g. cutting inserts used for machining splines or teeth in a module range above 5, according to gear ISO standard DIN3960 and spline ISO standard DIN5480.

Accordingly, to improve manufacturing economy, there is a need for power skiving cutting inserts that can be used for an increased period of time before being discarded.

### SUMMARY

It is an object of the present invention to mitigate the shortcomings of the prior art and to provide an improved cutting insert that can be re-used many times, resulting in improved manufacturing economy, and to provide a cutting tool therefor.

According to a first aspect of the invention, said object is achieved by means of a cutting insert having the features defined in claim 1.

Thus, the cutting insert according to the invention comprises:
- a first side including a rake face,
- a second side opposite the first side,
- a peripheral surface extending between the first side and the second side, wherein the peripheral surface includes a relief surface comprising a first relief subsurface, a second relief subsurface and a corner relief subsurface, wherein the corner relief subsurface is located between the first relief subsurface and the second relief subsurface and forms a continuous transition therebetween, and
- a cutting edge arranged at the intersection between the relief surface and the rake face, the cutting edge including a first flank edge, a second flank edge and a nose edge, wherein the first flank edge is arranged at the intersection between the first relief subsurface and the rake face, wherein the second flank edge is arranged at the intersection between the second relief subsurface and the rake face, and wherein the nose edge is arranged at the intersection between the corner relief subsurface and the rake face, and wherein the first and second flank edges extend from respective end points thereof to the nose edge, wherein the cutting edge is arranged in a first plane and has a cutting edge profile.

In each point of the cutting edge, the relief surface is arranged such that a nominal relief angle of each of the first relief subsurface, the second relief subsurface and the corner relief subsurface is positive and has a maximum value in a first point along the nose edge.

The relief surface is furthermore arranged such that, when seen in a section plane through the insert and in parallel to the first plane, an intersection formed by the section plane, on one hand, and the first relief subsurface, the second relief subsurface and the corner relief subsurface on the other hand, has a profile that is identical to the cutting edge profile.

The cutting insert is exchangeable and can thus be mounted and removed from an insert seat of a power skiving tool body. The inventor has discovered that if using a geometry of the cutting insert as defined above, the profile of the cutting edge would remain the same also after re-grinding the insert using a simple face grinding procedure, i.e. without requiring any further machining operations. Thereby, a re-grindable power skiving cutting insert having an increased total tool life is obtained.

The cutting insert is preferably a coated carbide insert for power skiving of metallic workpieces.

The first side and the second side may be parallel to each other. In other words, the cutting insert may have a uniform thickness.

As used herein, when a feature is described as "nominal", it solely relates to the cutting insert as such, i.e., without coupling to the tool body, but if the same feature is denominated "functional", it relates to the assembled state of the tool, i.e., with the cutting insert mounted in a seat in the tool body.

The relief surface and the rake face may form an acute wedge angle in each point of the cutting edge. This would be the case if no additional cutting edge reinforcements are applied. However, if the rake face includes a reinforcement land such as a negative land, i.e. wherein the cutting edge is formed at the intersection between such reinforcement land and the relief surface, the wedge angle between the rake face and the relief surface may be obtuse.

A "cutting edge" should be understood as including all parts of an edge that is meant to engage in cutting action with a workpiece during a power skiving process. Thus, the "end points" of each of the first and second flank edges are not necessarily characterized by any specific physical attributes, and are not necessarily visibly distinguishable from adjacent points on the edge, but merely refers to the most remote points along the respective flank edges that may come into cutting engagement with the workpiece during use of the power skiving tool. The cutting edge preferably consists of the first flank edge, the second flank edge and the nose edge.

The present invention may be most useful when machining splines or teeth in a module range above 5, for example in a module range of 5-20, or 5-15, or 7-12. The great size of the cutting inserts required for such modules means that each cutting insert will be expensive, thus increasing the value of cutting inserts that are easily re-grindable. Accordingly, as an example, the cutting insert may be of a size used to manufacture splines having a total height of 5 mm or more, or gear teeth having a total height of 11.25 mm or more.

The first flank edge meets the nose edge in a first transition point. The nose edge on its side of the first transition point and adjacent to the first transition point, may be convexly curved and having a first radius of curvature. The first flank edge on its side of the first transition point and adjacent to the first transition point, may comprise either a first convexly curved circle segment or a straight segment adjacent to a first convexly curved circle segment of the first flank edge, wherein the first convexly curved circle segment of the first flank edge has a second radius of curvature, and wherein the second radius of curvature is larger, for example at least five times or at least ten times larger, than the first radius of curvature. According to some embodiments, the first radius of curvature is less than 5 mm. In the same way, the second flank edge meets the nose edge in a second transition point. The nose edge on its side of the second transition point and adjacent to the second transition point, may be convexly curved having a third radius of curvature. The second flank edge on its side of the second transition point and adjacent to the second transition point, may comprise either a first convexly curved circle segment or a straight segment adjacent to a first convexly curved circle segment of the second flank edge, wherein the first convexly curved circle segment of the second flank edge has a fourth radius of curvature, and wherein the fourth radius of curvature is larger, for example at least five times or at least ten times larger, than the third radius of curvature. According to some embodiments, the third radius of curvature is less than 5 mm. Each of the first and second flank edge may comprise a plurality of convexly curved segments having different radii of curvature. According to some embodiments, for each flank edge, the first of the convexly curved segments, starting from the end point of the flank edge, has the smallest radius of curvature. For each flank edge, the convexly curved segment following upon the first convexly curved segment, and each subsequent convexly curved segment when moving towards the nose edge, may have a greater radius of curvature than the preceding convexly curved segment.

The relief surface is preferably arranged such that the profile of an intersection formed by the section plane, on one hand, and the first relief subsurface, the second relief subsurface and the corner relief subsurface on the other hand, is identical to the cutting edge profile for a plurality of section planes through the insert that are parallel to the first plane, for example in all such section planes. However, this feature is not necessarily fulfilled for all such section planes. For example, in some section planes through the insert that are parallel to the first plane, e.g. section planes close to the second side, the profile of the intersection formed by the section plane, on one hand, and the first relief subsurface, the second relief subsurface and the corner relief subsurface on the other hand, may be different from the cutting edge profile. However, the profile should be identical to the cutting edge profile for all, or at least a majority of, the section planes in a region of the cutting insert adjacent the first side that corresponds to a maximum re-grinding depth.

Thus, according to some embodiments, the section plane is arranged at any distance up to at least 0.3mm, or at least 0.5mm, or at least 1.0mm, or at least 1.5mm, or at least 2.0mm, or at least 2.5mm, or at least 3.0mm, from the first plane.

In order to restore the shape of a worn cutting edge, the first side may need to be subject to a face grinding operation to a depth of approximately 0.3 mm, which is an accepted measure of the maximum permissible flank wear in power skiving. Such a face grinding operation removes the worn-out parts of the rake face and the relief surface. Prior to the face grinding operation, the insert may be subject to a coating stripping process, i.e., a process of removing the remnants of the initial coating in a special operation, for example a chemical operation. Subsequent to the face grinding operation, the insert may be coated again. Thus, in order to allow for at least one re-grinding operation, any section plane through the insert that is parallel to the first plane and located within 0.3 mm from the first plane may form an intersection with the first relief subsurface, the second relief subsurface and the corner relief subsurface that has a profile that is identical to the cutting edge profile. In order to allow for even greater re-grinding depths, for example in order to compensate for greater tool wear that may occur due to local chipping of the edge, and/or to allow for multiple re-grinding operations, any section plane through the insert that is parallel to the first plane and located within a distance from the first plane that is greater than 0.3mm, such as at least 0.5 mm, or at least 1.0mm, or at least 1.5mm, or at least 2.0mm, or at least 2.5mm, or at least 3.0mm, may form an intersection with the first relief subsurface, the second relief subsurface and the corner relief subsurface that has a profile that is identical to the cutting edge profile.

As a further example, at least any section plane through the insert that is parallel to the first plane and located between the first plane and a median plane through the cutting insert that is parallel to the first plane and located halfway between the first side and the second side, may form an intersection with the first relief subsurface, the second relief subsurface and the corner relief subsurface that has a profile that is identical to the cutting edge profile.

An imaginary reference line can be drawn in the first plane such that it extends through the first point and is perpendicular to a tangent to the cutting edge in the first point.

The first point at which the nominal relief angle has its maximum value may in many cases be considered as a vertex of the cutting edge profile, and, with respect to a center axis of a power skiving tool, correspond to the radially most remote point of the cutting edge when the cutting insert is mounted in a seat of such power skiving tool. The tangent to the cutting edge at this point may be directed perpendicularly to a general longitudinal direction of extension of the cutting insert, i.e. a direction along which the cutting insert has its greatest length. Accordingly, the reference line may extend in parallel to or coincide with such longitudinal extension of the cutting insert.

According to some embodiments of the invention, both the first and the second flank edge, when seen in a direction from their respective end points towards the nose edge, converge towards such reference line. Each flank edge may converge towards the reference line along its entire range of extension from its end point to the nose edge.

Moreover, according to some embodiments of the invention, the first and second flank edges are asymmetrical in relation to such reference line.

Thereby, the cutting insert is particularly suitable for use in power skiving tools because it enhances use of a larger variety of tipping-in angles and shaping different tooth profiles. In contrast to other tooth milling processes, a power skiving process sometimes may not provide a desired tooth profile in the workpiece if the flank cutting edges are symmetrical, in particular when cutting involute teeth. By imparting the flank edges with this asymmetrical shape, the individual cutting insert's entering into and exiting from the gashes being made in the workpiece is facilitated.

According to some embodiments of the invention, the cutting insert may comprise a through hole, which extends between the first side and the second side.

Thereby, the cutting insert can be fixed within an insert seat of a power skiving tool body by a fastening element extending through the hole. For example, the fastening element may be a screw, wherein the threaded part of the screw is arranged to engage a threaded hole in the insert seat.

Accordingly, the bottom surface of each insert seat of the power skiving tool body may comprise a threaded hole, which facilitates mounting of the cutting insert using a fastening element, such as a screw.

The through hole in the cutting insert may have two sections of different diameter, the interface therebetween forming a support surface, e.g. a funnel-like, approximately conical, section, arranged to be engaged by the head of a screw inserted through the hole in order to fasten the insert in the seat. The through-hole may be formed such that the support surface or funnel-like section is located at a depth that is greater than the maximum re-grinding depth of the cutting insert. For example, the support surface or funnel-like section may be located at a depth of the hole that corresponds to as much as, or even more than, half the total length of extension of the through hole. Thereby, it may be possible to regrind the insert multiple times without affecting the engagement between the screw and the threaded hole in the insert seat. The through hole may be arranged such that the reference line through the first point, perpendicular to the tangent to the first point, is contained in the first plane and intersects the center of the through hole.

The through hole may extend through the cutting insert in a central region of the insert, e.g. halfway across the maximum width of the insert, the width being measured in a direction perpendicular to the reference line.

According to some embodiments of the invention, along at least a major part of each of the first and second flank edges, in a direction away from the nose edge, the nominal relief angle decreases. The nominal relief angle may decrease along the entire range of extension of one or both flank edges, from the nose edge to the respective end point.

The relief angle may decrease continuously all along the cutting edge in such direction. However, it is also possible that the relief angle is constant along parts of the cutting edge, e.g. along segments of the cutting edge having a straight profile, or even increasing, e.g. along segments of the cutting edge that are concavely curved.

According to some embodiments of the invention, the portion of each of the first and second flank edges along which the nominal relief angle decreases in a direction away from the nose edge corresponds to at least 70% of a total length of extension of the respective flank edge. According to some embodiments of the invention, the maximum value αₘₐₓ of the nominal relief angle is within the range 5-25°, or 10-20°, or 12-17°.

If the maximum value αₘₐₓ of the nominal relief angle is less than 5°, the cutting process may not be optimal as the cutting insert cannot be given appropriate tipping-in angles in the cutter body. Furthermore, if the maximum value αₘₐₓ of the nominal relief angle is larger than 25°, a face griding operation of the rake face causes small chipping of the edge in the area around the first point (at which the nominal relief angle has its maximum) if the grinding direction is not favorable. According to some embodiments, the maximum value of the nominal relief angle is within the range 10-20°. The cutting insert is preferably coated, and a presence of coating may have an undesirable effect of reducing the nominal relief angle close to the cutting edge, which in its turn has an effect of also reducing a functional relief angle. It has been observed that if the maximum value αₘₐₓ of the nominal relief angle is less than 10°, it may lead to a more frequent need of re-griding of the insert, if it is coated, because the nominal relief angle along parts of the first and the second flank edge may become too small. It has also been observed that if the maximum value αₘₐₓ of the nominal relief angle is 20° or less, a stable re-grinding process is achieved without a need of control of the quality of the cutting edge. According to some embodiments the maximum value of the nominal relief angle is within a range of 12-17° where best performance and quality of re-grinded inserts are observed. Hence, as an example, the maximum value of the nominal relief angle may be 15°

The profile of the nose edge, as seen in the first plane, may be formed by one or more convexly curved circle segments.

For example, the profile of the nose edge may be formed by a single convexly curved circle segment. It may also be formed by multiple segments having different radii of curvature. The profile of the nose edge may be smooth, with no sharp corners. However, for some tooth profiles to be manufactured, it is also possible that the nose edge profile is formed by short segments with very small radius of curvatures and with a portion therebetween including one or more segments having a very large radius of curvature (sometimes nearly linear segments), resulting in a profile with a rather angular appearance. If the bottom of the tooth profile to be manufactured is flat, the nose edge may even have a concavely shaped segment in the front.

The profile of each of the first and second flank edges, as seen in the first plane, may also be formed, at least to a major part, by one or more convexly curved circle segments.

As an example, the profile of each of the flank edges may be formed solely by convexly curved circle segments. However, the profile may also comprise linear portions and/or concave portions. For example, for certain teeth profiles to be machined, e.g. so called semi-topping tooth profiles, a part of a flank edge located in the vicinity of its end point may have a profile formed by one or more concavely curved circle segments.

According to some embodiments of the invention, and irrespective of whether the flank edge profile also comprises straight and/or concavely curved circle segments, the convexly curved circle segments of the flank edge profile may have an increasing radius of curvature along the respective flank edge in a direction from its end point towards the nose edge.

The nominal relief angle (α) in any second point along the cutting edge may be a function of the maximum value (αₘₐₓ) of the nominal relief angle and the acute angle (θ) between a tangent to the cutting edge in said second point and a tangent to the cutting edge in the first point. For example, the nominal relief angle (α) in any second point along the cutting edge may be determined as $α = arctan \left(tan {α}_{max}⋅cos θ\right) ,$ in which αₘₐₓ is the relief angle in the first point and θ is the acute angle between a tangent to the cutting edge in the second point and a tangent to the cutting edge in the first point.

Such geometry of the relief surface may be achieved when designing a cutting insert, on the basis of a desired cutting edge profile, by projecting the cutting edge profile along a path in a direction of a projection vector that, with respect to a normal vector to the first plane, is inclined by an angle corresponding to the maximum value αₘₐₓ of the relief angle, wherein the projection vector is furthermore contained in a plane that is perpendicular to the first plane and contains the reference line.

According to some embodiments, the cutting insert is indexable and comprises a further cutting edge arranged in the first plane, wherein both cutting edges have identical cutting edge profiles and are arranged opposite to each other.

Thereby, the cutting insert may be mountable in an insert seat of a power skiving tool in either a first position in which one of the cutting edges is active, or in a second position in which the other cutting edge is active. **In** other words, the cutting insert may be a two-way indexable insert. Thereby, the time the cutting insert can be used may be prolonged even more, since it may be used in two different positions before being re-grinded.

For such two-way indexable cutting insert, a reference line as defined previously may pass through both points of the respective cutting edges at which the nominal relief angle has a maximum value. Alternatively, corresponding reference lines, when drawn through their respective points at which the nominal relief angle has a maximum value and extending in a direction perpendicular to tangents to such points, may not necessarily extend coaxially but, for example, parallel to each other.

According to some embodiments, the second side of the cutting insert may comprise one or more engagement structures arranged to engage with complementary engagement structures in a bottom surface of an insert seat of a power skiving tool body in order to position the cutting insert in the insert seat and prevent movement of the cutting insert in a plane of the bottom surface of the insert seat.

For example, the one or more engagement structures may comprise one or more grooves and the complementary engagement structures may comprise one or more ridges, or vice versa, wherein the one or more grooves or one or more ridges in the one or more engagement structures comprised in the second side of the cutting insert is arranged to co-operate with the one or more ridges or one or more grooves of the complementary engagement structures in the bottom surface of the insert seat.

The one or more grooves and the corresponding one or more ridges may include at least two separate grooves/ridges that extend transverse to each other, preferably perpendicular to each other. As an example, a first groove may extend in the second surface of the cutting insert in a first direction, for example a direction that is parallel to the reference line as defined previously, whereas a second groove may extend in a direction that is perpendicular to the first direction. Co-operating ridges formed in the bottom surface of an insert seat of a power skiving tool in which the insert is to be mounted may be arranged in a corresponding way. When the insert is two-way indexable, the reference lines of the cutting edges are preferably coaxial to each other and parallel to the first groove arranged in the second surface. According to a second aspect, the invention relates to a power skiving tool comprising a tool body having a peripheral rim located in a first reference plane extending perpendicular to a center axis around which the rim is rotationally symmetrical. The rim includes a plurality of tangentially spaced-apart seats in which cutting inserts as described herein are mounted. Each seat is arranged in the tool body such that an intersection line between the first side of the cutting insert mounted in the seat and a second reference plane containing the center axis of the tool and the first point of the cutting edge, forms a radial angle with the first reference plane, wherein the radial angle corresponds to the maximum value of the nominal relief angle of the cutting insert.

When the cutting insert is mounted in the insert seat, the cutting insert may also be tipped in laterally with respect to the first reference plane. This lateral angle is the angle between the first reference plane and a line extending at the first side of the insert perpendicularly to the intersection line between the first side and the second reference plane. Such lateral angle may for example be in a range of 5-40°.

With this setup, wherein the radial angle corresponds to the maximum value of the nominal relief angle, not only will the cutting edge profile remain the same after regrinding the inserts - the cutting diameter will also remain unchanged. The only parameter of the cutting tool that will change due to regrinding the inserts is the effective "length" of the power skiving tool, i.e. its extension along the center axis. However, this change is easily compensated for in the machine, and will not affect the geometry of the machined teeth in a workpiece.

On the other hand, this tool configuration has no relief angle built into the design. In other words, if using such power skiving tool in a conventional power skiving setup, the functional relief angle when machining the workpiece would be zero. Therefore, to compensate for this and to create the relief angles required, such tool is preferably applied with its center axis offset with respect to a rotational center axis of the workpiece.

### BRIEF DESCRIPTION OF DRAWINGS

In the following, example embodiments will be described in greater detail and with reference to the accompanying drawings, in which:
Fig. 1 is a perspective view of a cutting insert according to an embodiment of the invention.
Fig. 2 is a different perspective view of the cutting insert illustrated in Fig. 1.
Fig. 3 is a side view of the cutting insert according to Fig. 1
Fig. 4 is a planar view of the cutting insert according to Fig. 1 as viewed from above and perpendicular to the first side 2.
Fig. 5 is a cross section V-V in Fig. 3.
Fig. 6 is a cross section VI-VI in Fig. 3.
Fig. 7 is a cross section VII-VII in Fig. 4.
Fig. 8 is a cross section VIII-VIII in Fig. 4.
Fig. 9 is a cross section IX-IX in Fig. 4.
Fig. 10 is a perspective view of a power skiving tool according to an embodiment of the invention, comprising a plurality of cutting inserts as shown in Figs. 1-9.
Fig. 11 is a side view of the tool according to Fig. 10.
Fig. 12 is a planar view showing the tool according to Fig. 10 as viewed from below.
Fig. 13 is a cross section XIII-XIII in Fig. 12.
Fig. 14 is a cross section XIV-XIV in Fig. 12.
Fig. 15 is a partial perspective exploded view of the tool according to Fig. 10.
Fig. 16 is an enlarged cross section of the tool and the insert in a plane perpendicular to the first surface of the insert.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

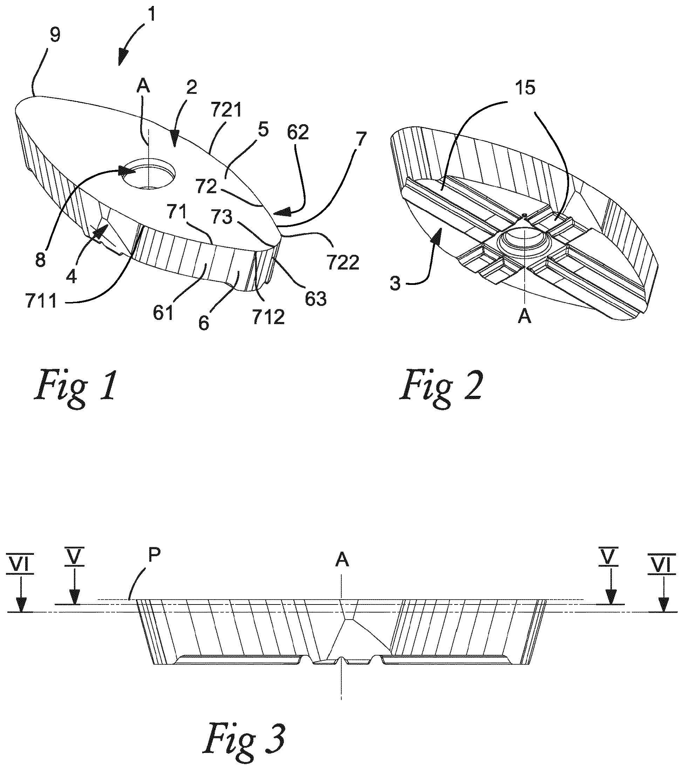

Figs. 1-9 illustrate a cutting insert 1 according to an embodiment of the invention.

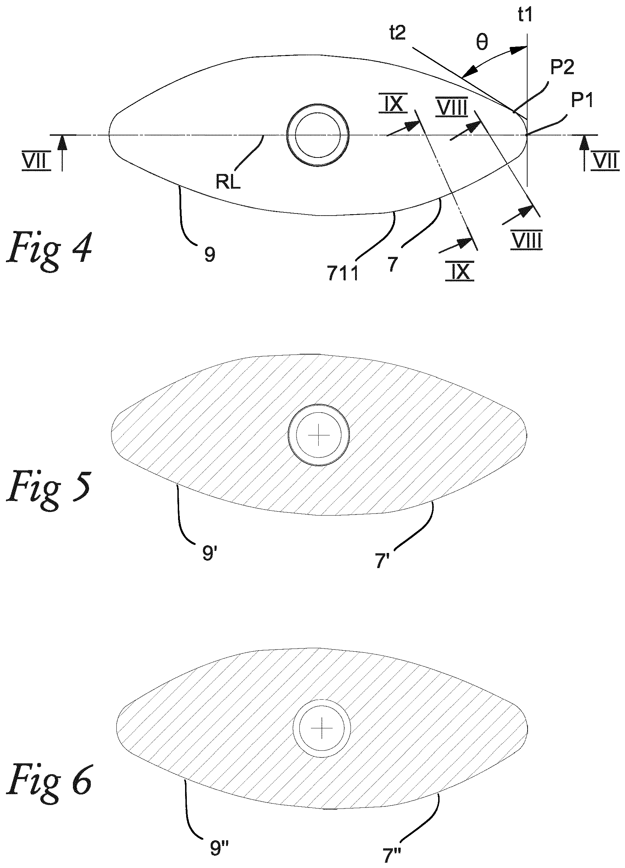

The cutting insert 1 comprises a first side 2, a second side 3 and a peripheral surface 4. The first side 2 includes a rake face 5, and the peripheral surface 4 includes a relief surface 6 comprising a first relief subsurface 61, a second relief subsurface 62 and a corner relief subsurface 63. At the intersection between the relief surface 6 and the rake face 5, a cutting edge 7 is formed which includes a first flank edge 71, a second flank edge 72 and a nose edge 73. The first flank edge 71 is arranged at the intersection between the rake face 5 and the first relief subsurface 61, the second flank edge 72 is arranged at the intersection between the rake face 5 and the second relief subsurface 62, and the nose edge 73 is arranged at the intersection between the rake face 5 and the corner relief subsurface 63. The cutting insert further comprises a through hole 8 extending between the first side and the second side along an axis A which is also a center axis of the through hole 8. The cutting edge 7 is arranged in a first plane P that is perpendicular to the axis A. The cutting edge 7 has a certain cutting edge profile in the first plane P, as best seen in Fig. 4. A nominal relief angle α of each of the first relief subsurface, the second relief subsurface and the corner relief subsurface is positive, and has a maximum value αₘₐₓ in a first point P1 along the nose edge.

As further illustrated in Fig.4, a reference line RL can be drawn that extends in the first plane P and through the first point P1, and that is perpendicular to a tangent t1 to the cutting edge in the first point P1. According to this embodiment, the reference line RL intersects the center axis A of the through hole 8 and extends through a corresponding first point of another cutting edge 9 in which the nominal relief angle also has a maximum value. The cutting edges 7, 9 are located on opposite sides of the edge defined by the transition between the first side 2 and the peripheral surface 4. The cutting edges 7, 9 are 180° rotationally symmetrical to each other with respect to the center axis A of the through hole 8 that is also a center axis of the cutting insert. Furthermore, the cutting insert has 180° rotational symmetry with regard to the center axis A.

The first and second flank edges 71, 72 extend from respective end points 711, 721 thereof to the nose edge 73. Each of the flank edges 71, 72, when seen in a direction from their respective end points 711,721 towards the nose edge 73, converges towards the reference line RL. According to this embodiment, the profile in the first plane P of each flank edge 71, 72 comprises a plurality of convexly curved circle segments. The convexly curved segments have different radii of curvature, wherein the first segment, starting from the end point of the flank edge, has the smallest radius of curvature of the segments defining the respective flank edge. For each flank edge, the segment following upon the first segment, and each subsequent segment when moving towards the nose edge, has a greater radius of curvature than the preceding segment. According to this embodiment, the transition from each flank edge 71, 72 to the nose edge 73 corresponds to a point in which a convexly curved segment with a smaller radius of curvature commences. The profile of the nose edge 73 also includes several convexly curved segments of different radii of curvature.

The first flank edge 71 meets the nose edge 73 in a first transition point 712. The nose edge 73 on its side of the first transition point 712 and adjacent to the first transition point 712, is convexly curved and having a first radius of curvature. The first flank edge 71 on its side of the first transition point 712 and adjacent to the first transition point 712, comprises a first convexly curved circle segment having a second radius of curvature. The second radius of curvature is significantly larger than the first radius of curvature. In the same way, the second flank edge 72 meets the nose edge 73 in a second transition point 722. The nose edge 73 on its side of the second transition point 722 and adjacent to the second transition point 722, is convexly curved having a third radius of curvature. The second flank edge 72 on its side of the second transition point 722 and adjacent to the second transition point 722, comprises a first convexly curved circle segment having a fourth radius of curvature, wherein the fourth radius of curvature is significantly larger than the third radius of curvature.

As best seen in Fig. 4, the first flank edge 71 and the second flank edge 72 are asymmetrical in relation to the reference line RL.

As mentioned, the nominal relief angle α has a maximum value αₘₐₓ in the first point P1. The nominal relief angle decreases when moving away from the first point P1 along the cutting edge. In this embodiment, in which the nose edge and the flank edges are solely formed by convexly curved circle segments, the nominal relief angle decreases continuously along the cutting edge 7 in a direction from the nose edge, toward and all the way to the respective end points 711, 721 of the flank edges 71, 72.

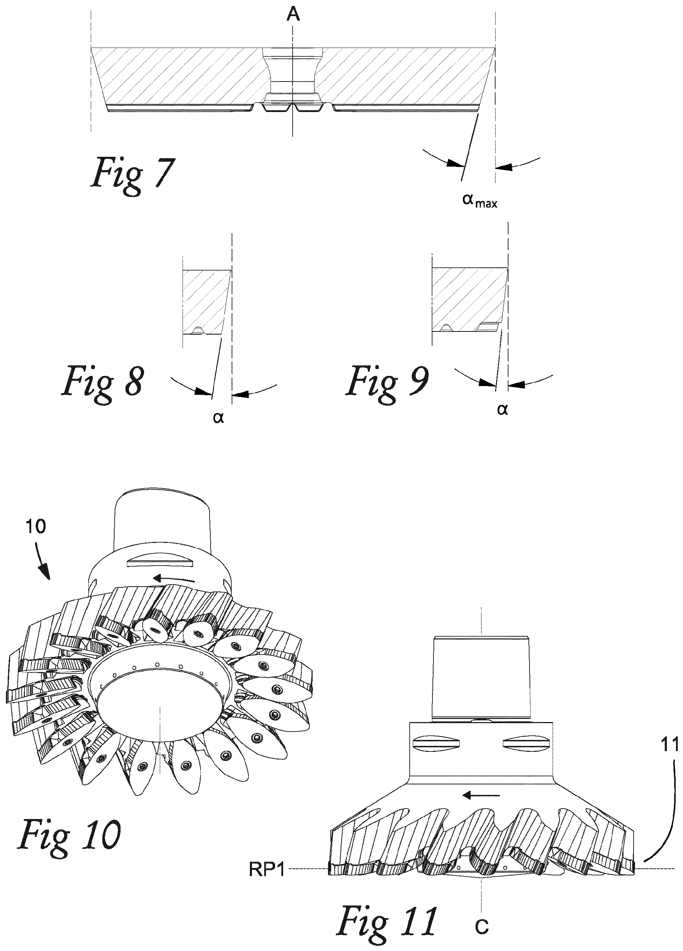

The maximum relief angle αₘₐₓ in the first point P1 is illustrated in Fig. 7, which shows a cross-section of the cutting insert 1 in a section through the first point P1 along the reference line RL, as indicated in Fig. 4. According to this embodiment, the maximum relief angle αₘₐₓ is 15°.

The relief angle α at another arbitrary point P2 along the cutting edge 7 depends on the value of the maximum relief angle αₘₐₓ and on the angle θ, illustrated in Fig. 4, between a tangent t2 to the cutting edge 7 in such second point P2 and a tangent t1 to the cutting edge 7 in the first point P1. In particular, the nominal relief angle α in a point P2 can be determined as $α = arctan \left(tan {α}_{max}⋅cos θ\right) ,$ wherein αₘₐₓ is the relief angle in the first point P1 and θ is the acute angle between a tangent t2 to the cutting edge 7 in the second point P2 and a tangent t1 to the cutting edge 7 in the first point P1.

Figures 8 and 9 illustrate two other cross sections through the cutting insert 1 along the lines VIII-VIII and IX-IX, respectively, in Fig. 4, illustrating that the nominal relief angle α decreases when approaching the end point 711, in dependence of the angle θ as discussed above.

When seen in a section plane through the insert 1 and in parallel to the first plane P, an intersection formed by the section plane, on one hand, and the first relief subsurface 61, the second relief subsurface 62 and the corner relief subsurface 63 on the other hand, has a profile that is identical to the cutting edge profile. This is illustrated in Figs. 5 and 6, showing sections along the lines V-V and VI-VI, respectively, in Fig. 3. Accordingly, if removing (e.g. by grinding) all material between the first plane P and such section plane, re-grinded cutting edges 7',9', 7", 9" would have the exact same profiles as the original cutting edges 7, 9. The total length of the re-grinded first side of the insert, as measured along the reference line RL, will be smaller than a corresponding length of the original first side 2. However, the relief surface 6 is shaped such that the profile of the cutting edges will not be affected by this.

In Fig. 3, the distance from the first plane P to the section plane illustrated in Fig. 6, corresponds to a maximum available grinding depth. In all section planes that are parallel to the first plane P within this region, the profile formed by an intersection between such section plane, on one hand, and the first relief subsurface 61, the second relief subsurface 62 and the corner relief subsurface 63 on the other hand, will have a profile that is identical to the cutting edge profile. This will be true also for section planes located even further from the first plane P, at distances greater than the maximum grinding depth. It may nevertheless be inappropriate to re-grind the cutting insert beyond the defined maximum grinding depth, for example due to requirements to maintain a sufficient strength and robustness of the cutting insert. In this example embodiment, the maximum grinding depth is 3 mm. Accordingly, if each re-grind involves removing material to a depth of 0.3 mm, it will be possible to re-grind the cutting insert 10 times.

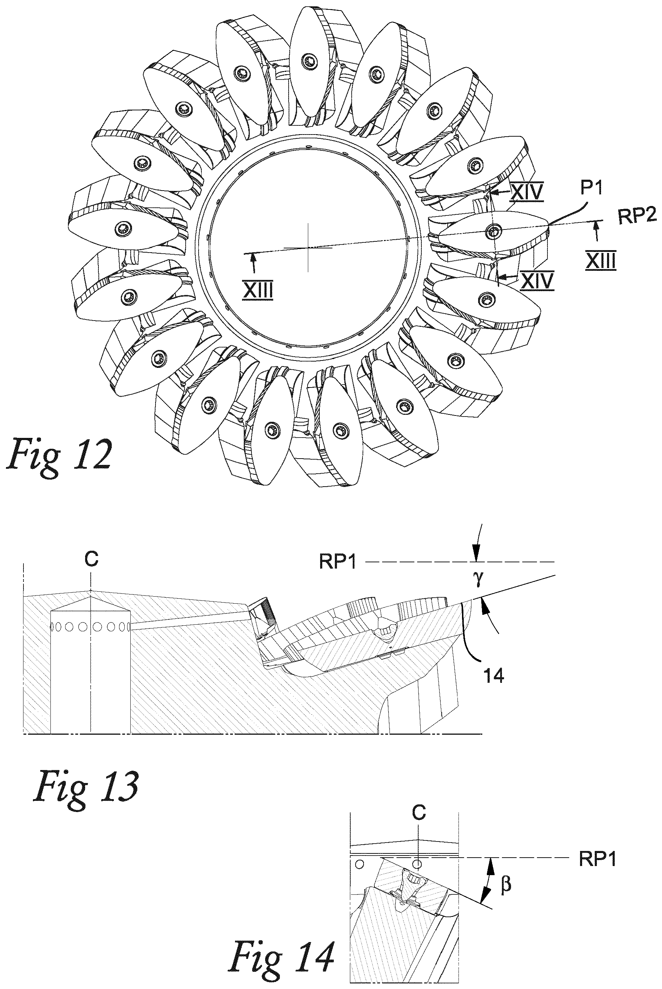

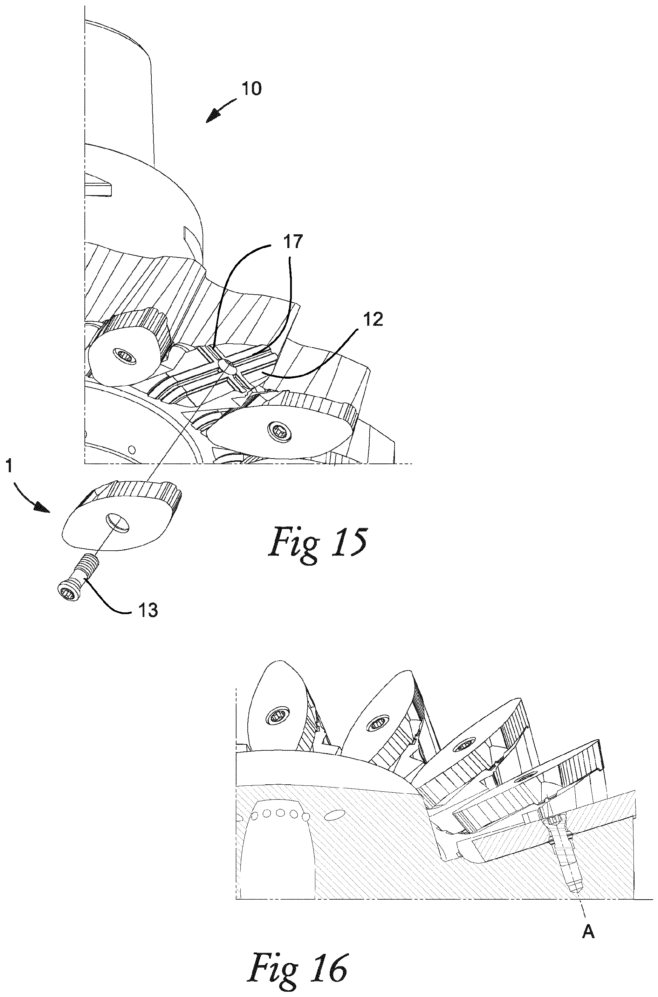

Figures 10-16 illustrate a power skiving tool according to an embodiment of the invention. The power skiving tool comprises a tool body 10 having a peripheral rim 11 located in a first reference plane RP1 (Fig. 11) extending perpendicular to a center axis C around which the rim is rotationally symmetrical. The rim 11 includes a plurality of tangentially spaced-apart seats 12 (Fig. 15) in which cutting inserts 1 are mounted by means of a screw 13. An intersection line 14 (Fig. 13) between the first side 2 of an insert 1 and a second reference plane RP2 containing the center axis C of the tool and the first point P1 of the insert's cutting edge, forms a radial angle γ with the first reference plane RP1. The radial angle γ can be considered as a functional rake angle of the power skiving tool, and according to the invention it corresponds to the maximum value αₘₐₓ of the nominal relief angle of the cutting insert 1. Hence, according to the present embodiment, in which the maximum value αₘₐₓ of the nominal relief angle is 15°, the inserts are radially tipped-in with a corresponding angle γ of 15°.

For each cutting insert, the first point P1 is located at the vertex of the cutting edge profile. When the cutting inserts 1 are arranged in the power skiving tool body 10, the first point P1 of each cutting insert 1 will be a point of the power skiving tool that is located at the greatest distance from the center axis C, i.e. a radially outermost location. Since the nominal relief angle αₘₐₓ at this point corresponds to the radial angle y, the part of the relief surface 6 adjacent the cutting edge 7 at this location will be oriented in parallel to the center axis C. As seen in Fig. 13, the functional relief angle thus formed appears to be initially zero, but then increasing. This is because each cutting insert 1 is not only tipped in radially with respect to the tool body 10, but also laterally. Thus, as seen in Fig. 14, a lateral angle β is formed between the first reference plane RP1 and a line extending at the first side of the insert 1 perpendicularly to the intersection line 14. In the present embodiment, the lateral angle β is 25°. Fig. 16 further illustrates the insert's orientation with respect to the tool body and shows a section through the power skiving tool similar to what is shown in Fig. 13, but in a section plane extending at an angle of 25° to the center axis C, perpendicular to the first surface 2 of the cutting insert 1.

In this connection, it should also be mentioned that the exemplified embodiment of the cutting insert 1 is of uniform thickness (if disregarding the engagement structures 15 in the second side 3 of the insert). In other words, the second side 3 is arranged in a plane in parallel with the first side 2. For this reason, the tipping-in of the cutting insert is laterally (the angle β) as well as radially (the angle y) provided by the seats 12 of the tool body being formed with their bottom surfaces inclined at the respective angles in relation to the reference plane RP1.

A power skiving tool is usually applied with its center axis tilted in a tangential direction with respect to the rotational axis of the workpiece, but not tilted in a radial direction. Thus, if applying the tool according to the invention in such way, the functional relief angle would be zero. Therefore, to provide the relief required and prevent rubbing against the workpiece, a power skiving tool according to the present invention is preferably applied with its center axis offset with respect to a rotational center axis of the workpiece.

With reference to Figs. 2 and 15, the interface between the cutting insert and the insert seat will now be described. The second side 3 of the cutting insert 1 comprises engagement structures 15 extending across the second side. The engagement structures 15 comprises so-called cross serrations in the form of either grooves or ridges on the cutting insert for engagement with a corresponding number of ridges or grooves in the insert seat 12. According to this specific embodiment, each engagement structure formed in the second side 3 of the cutting insert 1 consists of two ridges extending in parallel such that a groove is formed therebetween. The engagement structures are oriented perpendicularly to each other while forming a cross-like configuration. Each one of the two engagement structures 15 is interrupted by the through hole 8. **In** other words, the centrally arranged groove of each engagement structure 15 consists of two sections located in line with each other, distanced from each other via the through hole 8.

The complementary engagement structures 17 in the bottom surface of the seat 12 also extend at right angles to each other while forming a cross-like configuration of the same type as the cross configuration of the engagement structures 15 of the cutting insert 1. Each complementary engagement structure 17 comprises a central ridge arranged to cooperate with the corresponding groove of the insert's engagement structure.

Furthermore, it should be pointed out that all ridges and grooves have chamfered or inclined side surfaces, which guarantee that the ridges are wedged up in the grooves in connection with fixation of the cutting insert by tightening the screw 13.

By means of the described coupling means, it is guaranteed that the cutting insert 1 by the simple measure of fastening the screw 13 is located in a very exactly defined position from which it is not dislodged by angular displacement or in another way.

Moreover, since no part of the peripheral surface 4 of the insert 1 is used as support surface for fixing the insert within the seat 12, the insert can be re-grinded without affecting the interface between the insert and the seat.

## Claims

1. A cutting insert (1) for a power skiving tool, comprising:
- a first side (2) including a rake face (5),
- a second side (3) opposite the first side (2),
- a peripheral surface (4) extending between the first side (2) and the second side (3), wherein the peripheral surface (4) includes a relief surface (6) comprising a first relief subsurface (61), a second relief subsurface (62) and a corner relief subsurface (63), wherein the corner relief subsurface (63) is located between the first relief subsurface (61) and the second relief subsurface (62) and forms a continuous transition therebetween, and
- a cutting edge (7) arranged at the intersection between the relief surface (6) and the rake face (5), the cutting edge (7) including a first flank edge (71), a second flank edge (72) and a nose edge (73), wherein the first flank edge (71) is arranged at the intersection between the first relief subsurface (61) and the rake face (5), wherein the second flank edge (72) is arranged at the intersection between the second relief subsurface (62) and the rake face (5), and wherein the nose edge (73) is arranged at the intersection between the corner relief subsurface (63) and the rake face (5), and wherein the first and second flank edges (71, 72) extend from respective end points (711, 721) thereof to the nose edge (73), wherein the cutting edge (7) is arranged in a first plane (P) and has a cutting edge profile,
wherein, in each point of the cutting edge (7), the relief surface (6) is arranged such that a nominal relief angle (α) of each of the first relief subsurface (61), the second relief subsurface (62) and the corner relief subsurface (63) is positive and has a maximum value (αₘₐₓ) in a first point (P1) along the nose edge (73),
**characterized in that** the relief surface (6) is furthermore arranged such that, when seen in a section plane through the cutting insert (1) and in parallel to the first plane (P), an intersection formed by the section plane, on one hand, and the first relief subsurface (61), the second relief subsurface (62) and the corner relief subsurface (63) on the other hand, has a profile that is identical to the cutting edge profile.

2. A cutting insert according to claim 1, wherein the section plane is arranged at any distance up to at least 0.3mm, or at least 0.5mm, or at least 1.0mm, or at least 1.5mm, or at least 2.0mm, or at least 2.5mm, or at least 3.0mm, from the first plane.

3. A cutting insert according to any of the previous claims, wherein each of the first and the second flank edge (71, 72), when seen in a direction from their respective end points (711, 721) towards the nose edge (73), converges towards a reference line (RL) contained in the first plane (P), wherein the reference line (RL) extends through the first point (P1) and is perpendicular to a tangent (t1) to the cutting edge in the first point (P1).

4. A cutting insert according to claim 3, wherein the first and second flank edges (71, 72) are asymmetrical in relation to the reference line (RL).

5. A cutting insert according to any of the previous claims, further comprising a through hole (8), which extends between the first side (2) and the second side (3).

6. A cutting insert according to any of the previous claims, wherein, along at least a major part of each of the first and second flank edges (71, 72), in a direction away from the nose edge (73), the nominal relief angle (α) decreases.

7. A cutting insert according to any of the previous claims, wherein the maximum value (αₘₐₓ) of the nominal relief angle is within the range 5-25°, or 10-20°, or 12-17°.

8. A cutting insert according to any of the previous claims, wherein the profile of the nose edge (73), as seen in the first plane (P), is formed by one or more convexly curved circle segments.

9. A cutting insert according to any of the previous claims, wherein the profile of each of the first and second flank edges (71, 72), as seen in the first plane (P), is at least to a major part formed by one or more convexly curved circle segments.

10. A cutting insert according to any of the previous claims, wherein the nominal relief angle (α) in any second point (P2) along the cutting edge (7) is a function of the maximum value (αₘₐₓ) of the nominal relief angle and the acute angle (θ) between a tangent (t2) to the cutting edge (7) in said second point (P2) and a tangent (t1) to the cutting edge (7) in the first point (P1).

11. A cutting insert according to any of the previous claims, wherein the nominal relief angle (α) in any second point (P2) along the cutting edge (7) is determined as $α = arctan \left(tan {α}_{max}⋅cos θ\right) ,$ in which αₘₐₓ is the relief angle in the first point (P1) and θ is the acute angle between a tangent (t2) to the cutting edge (7) in the second point (P2) and a tangent (t1) to the cutting edge (7) in the first point (P1).

12. A cutting insert according to any of the previous claims, wherein the cutting insert (1) is indexable and comprises a further cutting edge (9) arranged in the first plane (P), wherein both cutting edges (7, 9) have identical cutting edge profiles and are arranged opposite to each other.

13. A cutting insert according to any of the previous claims, wherein the second side (3) comprises one or more engagement structures (15) arranged to engage with complementary engagement structures (17) in a bottom surface of an insert seat (12) of a power skiving tool body (10) in order to position the cutting insert in the insert seat (12) and prevent movement of the cutting insert in a plane of the bottom surface of the insert seat (12).

14. A cutting insert according to claim 13, wherein the one or more engagement structures (15) comprises one or more grooves and the complementary engagement structures (17) comprises one or more ridges, or vice versa, wherein the one or more grooves or one or more ridges in the one or more engagement structures (15) comprised in the second side (3) of the cutting insert (1) is arranged to co-operate with the one or more ridges or one or more grooves of the complementary engagement structures (17) in the bottom surface of the insert seat (12).

15. A power skiving tool comprising a tool body (10) having a peripheral rim (11) located in a first reference plane (RP1) extending perpendicular to a center axis (C) around which the rim (11) is rotationally symmetrical, the rim (11) including a plurality of tangentially spaced-apart seats (12), wherein a cutting insert (1) according to any of the claims 1-14 is mounted in respective one of the plurality of seats (12), wherein each seat (12) of the plurality of seats (12) is arranged in the tool body (10) such that an intersection line (14) between the first side (2) of the cutting insert (1) mounted in the seat (12) and a second reference plane (RP2) containing the center axis (C) of the power skiving tool and the first point (P1) of the cutting edge (7) of the cutting insert (1), forms a radial angle (γ) with the first reference plane (RP1), wherein the radial angle (γ) corresponds to the maximum value (αₘₐₓ) of the nominal relief angle of the cutting insert (1).

## Patentansprüche

1. Schneideinsatz (1) für ein Wälzschälwerkzeug, umfassend:
- eine erste Seite (2) mit einer Spanfläche (5),
- eine der ersten Seite (2) gegenüberliegende zweite Seite (3),
- eine Umfangsfläche (4), die sich zwischen der ersten Seite (2) und der zweiten Seite (3) erstreckt, wobei die Umfangsfläche (4) eine Freifläche (6) aufweist, die eine erste Freiflächen-Teilfläche (61), eine zweite Freiflächen-Teilfläche (62) und eine Eckfreiflächen-Teilfläche (63) umfasst, wobei die Eckfreiflächen-Teilfläche (63) zwischen der ersten Freiflächen-Teilfläche (61) und der zweiten Freiflächen-Teilfläche (62) angeordnet ist und einen kontinuierlichen Übergang zwischen diesen bildet, und
- eine Schneidkante (7), die an der Schnittlinie zwischen der Freifläche (6) und der Spanfläche (5) angeordnet ist, wobei die Schneidkante (7) eine erste Flankenkante (71), eine zweite Flankenkante (72) und eine Nasenkante (73) umfasst, wobei die erste Flankenkante (71) an der Schnittlinie zwischen der ersten Freiflächen-Teilfläche (61) und der Spanfläche (5) angeordnet ist, wobei die zweite Flankenkante (72) an der Schnittlinie zwischen der zweiten Freiflächen-Teilfläche (62) und der Spanfläche (5) angeordnet ist und wobei die Nasenkante (73) an der Schnittlinie zwischen der Eckfreiflächen-Teilfläche (63) und der Spanfläche (5) angeordnet ist, und wobei sich die erste und die zweite Flankenkante (71, 72) von ihren jeweiligen Endpunkten (711, 721) bis zu der Nasenkante (73) erstrecken, wobei die Schneidkante (7) in einer ersten Ebene (P) angeordnet ist und ein Schneidkantenprofil aufweist,
wobei die Freifläche (6) an jedem Punkt der Schneidkante (7) derart angeordnet ist, dass ein nomineller Freiwinkel (α) jeder der ersten Freiflächen-Teilfläche (61), der zweiten Freiflächen-Teilfläche (62) und der Eckfreiflächen-Teilfläche (63) positiv ist und an einem ersten Punkt (P1) entlang der Nasenkante (73) einen Maximalwert (αₘₐₓ) aufweist,
**dadurch gekennzeichnet, dass** die Freifläche (6) ferner derart angeordnet ist, dass bei Betrachtung in einer durch den Schneideinsatz (1) verlaufenden und zu der ersten Ebene (P) parallelen Schnittebene eine durch die Schnittebene einerseits und die erste Freiflächen-Teilfläche (61), die zweite Freiflächen-Teilfläche (62) und die Eckfreiflächen-Teilfläche (63) andererseits gebildete Schnittlinie ein Profil aufweist, das mit dem Schneidkantenprofil identisch ist.

2. Schneideinsatz nach Anspruch 1, wobei die Schnittebene in einem beliebigen Abstand bis zu mindestens 0,3 mm oder mindestens 0,5 mm oder mindestens 1,0 mm oder mindestens 1,5 mm oder mindestens 2,0 mm oder mindestens 2,5 mm oder mindestens 3,0 mm von der ersten Ebene (P) angeordnet ist.

3. Schneideinsatz nach einem der vorhergehenden Ansprüche, wobei die erste und die zweite Flankenkante (71, 72), bei Betrachtung in einer Richtung von ihren jeweiligen Endpunkten (711, 721) zu der Nasenkante (73), jeweils zu einer in der ersten Ebene (P) liegenden Referenzlinie (RL) hin konvergieren, wobei sich die Referenzlinie (RL) durch den ersten Punkt (P1) erstreckt und senkrecht zu einer Tangente (t1) an die Schneidkante in dem ersten Punkt (P1) verläuft.

4. Schneideinsatz nach Anspruch 3, wobei die erste und die zweite Flankenkante (71, 72) in Bezug auf die Referenzlinie (RL) asymmetrisch sind.

5. Schneideinsatz nach einem der vorhergehenden Ansprüche, ferner umfassend eine Durchgangsbohrung (8), die sich zwischen der ersten Seite (2) und der zweiten Seite (3) erstreckt.

6. Schneideinsatz nach einem der vorhergehenden Ansprüche, wobei der nominelle Freiwinkel (α) entlang zumindest eines überwiegenden Teils sowohl der ersten als auch der zweiten Flankenkante (71, 72) in einer von der Nasenkante (73) wegführenden Richtung abnimmt.

7. Schneideinsatz nach einem der vorhergehenden Ansprüche, wobei der Maximalwert (αₘₐₓ) des nominellen Freiwinkels im Bereich von 5-25° oder 10-20° oder 12-17° liegt.

8. Schneideinsatz nach einem der vorhergehenden Ansprüche, wobei das Profil der Nasenkante (73), in der ersten Ebene (P) betrachtet, durch ein oder mehrere konvex gekrümmte Kreissegmente gebildet ist.

9. Schneideinsatz nach einem der vorhergehenden Ansprüche, wobei das Profil jeder der ersten und der zweiten Flankenkante (71, 72), in der ersten Ebene (P) betrachtet, zumindest überwiegend durch ein oder mehrere konvex gekrümmte Kreissegmente gebildet ist.

10. Schneideinsatz nach einem der vorhergehenden Ansprüche, wobei der nominelle Freiwinkel (α) an einem beliebigen zweiten Punkt (P2) entlang der Schneidkante (7) eine Funktion des Maximalwerts (αₘₐₓ) des nominellen Freiwinkels und des spitzen Winkels (θ) zwischen einer Tangente (t2) an die Schneidkante (7) in dem zweiten Punkt (P2) und einer Tangente (t1) an die Schneidkante (7) in dem ersten Punkt (P1) ist.

11. Schneideinsatz nach einem der vorhergehenden Ansprüche, wobei der nominelle Freiwinkel (α) an einem beliebigen zweiten Punkt (P2) entlang der Schneidkante (7) bestimmt ist als $α = arctan \left(tan {α}_{max}⋅cos θ\right) ,$ wobei αₘₐₓ der Freiwinkel in dem ersten Punkt (P1) ist und θ der spitze Winkel zwischen einer Tangente (t2) an die Schneidkante (7) in dem zweiten Punkt (P2) und einer Tangente (t1) an die Schneidkante (7) in dem ersten Punkt (P1) ist.

12. Schneideinsatz nach einem der vorhergehenden Ansprüche, wobei der Schneideinsatz (1) wendbar ist und eine weitere, in der ersten Ebene (P) angeordnete Schneidkante (9) umfasst, wobei beide Schneidkanten (7, 9) identische Schneidkantenprofile aufweisen und einander gegenüberliegend angeordnet sind.

13. Schneideinsatz nach einem der vorhergehenden Ansprüche, wobei die zweite Seite (3) eine oder mehrere Eingriffsstrukturen (15) umfasst, die zum Eingriff mit komplementären Eingriffsstrukturen (17) in einer Bodenfläche eines Einsatzsitzes (12) eines Wälzschälwerkzeugkörpers (10) eingerichtet sind, um den Schneideinsatz (1) in dem Einsatzsitz (12) zu positionieren und eine Bewegung des Schneideinsatzes (1) in einer Ebene der Bodenfläche des Einsatzsitzes (12) zu verhindern.

14. Schneideinsatz nach Anspruch 13, wobei die eine oder die mehreren Eingriffsstrukturen (15) eine oder mehrere Nuten umfassen und die komplementären Eingriffsstrukturen (17) einen oder mehrere Stege umfassen, oder umgekehrt, wobei die eine oder die mehreren Nuten oder der eine oder die mehreren Stege der in der zweiten Seite (3) des Schneideinsatzes (1) vorgesehenen Eingriffsstrukturen (15) dazu angeordnet sind, mit dem einen oder den mehreren Stegen bzw. der einen oder den mehreren Nuten der komplementären Eingriffsstrukturen (17) in der Bodenfläche des Einsatzsitzes (12) zusammenzuwirken.

15. Wälzschälwerkzeug, umfassend einen Werkzeugkörper (10) mit einem Umfangsrand (11), der in einer ersten Bezugsebene (RP1) liegt, die sich senkrecht zu einer Mittelachse (C) erstreckt, bezüglich derer der Umfangsrand (11) rotationssymmetrisch ist, wobei der Umfangsrand (11) eine Vielzahl von in Tangentialrichtung voneinander beabstandeten Einsatzsitzen (12) umfasst, wobei ein Schneideinsatz (1) nach einem der Ansprüche 1-14 jeweils in einem der Vielzahl von Einsatzsitzen (12) montiert ist, wobei jeder Einsatzsitz (12) der Vielzahl von Einsatzsitzen (12) in dem Werkzeugkörper (10) derart angeordnet ist, dass eine Schnittlinie (14) zwischen der ersten Seite (2) des in dem Einsatzsitz (12) montierten Schneideinsatzes (1) und einer zweiten Bezugsebene (RP2), die die Mittelachse (C) des Wälzschälwerkzeugs und den ersten Punkt (P1) der Schneidkante (7) des Schneideinsatzes (1) enthält, mit der ersten Bezugsebene (RP1) einen Radialwinkel (γ) bildet, wobei der Radialwinkel (γ) dem Maximalwert (αₘₐₓ) des nominellen Freiwinkels des Schneideinsatzes (1) entspricht.

## Revendications

1. Plaquette de coupe (1) pour un outil d'usinage motorisé, comprenant :
- une première face (2) comprenant une face de coupe (5),
- une seconde face (3) opposée à la première face (2),
- une surface périphérique (4) s'étendant entre la première face (2) et la seconde face (3), laquelle surface périphérique (4) comprend une surface de dépouille (6) comprenant une sous-surface de dépouille première (61), une sous-surface de dépouille seconde (62) et une sous-surface de dépouille d'angle (63), laquelle sous-surface de dépouille d'angle (63) est située entre la sous-surface de dépouille première (61) et la sous-surface de dépouille seconde (62) et forme une transition continue entre celles-ci, et
- une arête de coupe (7) qui est disposée à l'intersection entre la surface de dépouille (6) et la face de coupe (5), l'arête de coupe (7) comprenant une arête de flanc première (71), une arête de flanc seconde (72) et une arête de bec (73), laquelle arête de flanc première (71) est disposée à l'intersection entre la sous-surface de dépouille première (61) et la face de coupe (5), laquelle arête de flanc seconde (72) est disposée à l'intersection entre la sous-surface de dépouille seconde (62) et la face de coupe (5), et laquelle arête de bec (73) est disposée à l'intersection entre la sous-surface de dépouille d'angle (63) et la face de coupe (5), et dans lequel les arêtes de flanc première et seconde (71, 72) s'étendent de leurs points d'extrémité respectifs (711, 721) vers l'arête de bec (73), l'arête de coupe (7) étant disposée dans un premier plan (P) et présentant un profil d'arête de coupe,
dans lequel, en chaque point de l'arête de coupe (7), la surface de dépouille (6) est disposée de telle sorte qu'un angle de dépouille nominal (α) de chacune de la sous-surface de dépouille première (61), de la sous-surface de dépouille seconde (62) et de la sous-surface de dépouille d'angle (63) est positif et présente une valeur maximale (αₘₐₓ) en un premier point (P1) le long de l'arête de bec (73),
**caractérisée en ce que** la surface de dépouille (6) est en outre disposée de telle sorte que, vue dans un plan de coupe traversant la plaquette de coupe (1) et parallèle au premier plan (P), une intersection formée par le plan de coupe, d'une part, et la sous-surface de dépouille première (61), la sous-surface de dépouille seconde (62) et la sous-surface de dépouille d'angle (63), d'autre part, présente un profil qui est identique au profil d'arête de coupe.

2. Plaquette de coupe selon la revendication 1, dans laquelle le plan de coupe est disposé à n'importe quelle distance jusqu'à au moins 0,3 mm, ou au moins 0,5 mm, ou au moins 1,0 mm, ou au moins 1,5 mm, ou au moins 2,0 mm, ou au moins 2,5 mm, ou au moins 3,0 mm, à partir du premier plan.

3. Plaquette de coupe selon l'une quelconque des revendications précédentes, dans laquelle chacune des arêtes de flanc première et seconde (71, 72), vue dans une direction allant de leurs points d'extrémité respectifs (711, 721) vers l'arête de bec (73), converge vers une ligne de référence (RL) contenue dans le premier plan (P), laquelle ligne de référence (RL) s'étend à travers le premier point (P1) et est perpendiculaire à une tangente (t1) à l'arête de coupe au premier point (P1).

4. Plaquette de coupe selon la revendication 3, dans laquelle les arêtes de flanc première et seconde (71, 72) sont asymétriques par rapport à la ligne de référence (RL).

5. Plaquette de coupe selon l'une quelconque des revendications précédentes, comprenant en outre un trou traversant (8), qui s'étend entre la première face (2) et la seconde face (3).

6. Plaquette de coupe selon l'une quelconque des revendications précédentes, dans laquelle, le long d'au moins une majeure partie de chacune des arêtes de flanc première et seconde (71, 72), dans une direction s'éloignant de l'arête de bec (73), l'angle de dépouille nominal (α) diminue.

7. Plaquette de coupe selon l'une quelconque des revendications précédentes, dans laquelle la valeur maximale (αₘₐₓ) de l'angle de dépouille nominal est comprise dans la plage de 5 à 25°, ou de 10 à 20°, ou de 12 à 17°.

8. Plaquette de coupe selon l'une quelconque des revendications précédentes, dans laquelle le profil de l'arête de bec (73), tel que vu dans le premier plan (P), est formé par un ou plusieurs segments de cercle à courbure convexe.

9. Plaquette de coupe selon l'une quelconque des revendications précédentes, dans laquelle le profil de chacune des arêtes de flanc première et seconde (71, 72), tel que vu dans le premier plan (P), est au moins en majeure partie formé par un ou plusieurs segments de cercle à courbure convexe.

10. Plaquette de coupe selon l'une quelconque des revendications précédentes, dans laquelle l'angle de dépouille nominal (α) en tout second point (P2) le long de l'arête de coupe (7) est une fonction de la valeur maximale (αₘₐₓ) de l'angle de dépouille nominal et de l'angle aigu (θ) entre une tangente (t2) à l'arête de coupe (7) au dit second point (P2) et une tangente (t1) à l'arête de coupe (7) au premier point (P1).

11. Plaquette de coupe selon l'une quelconque des revendications précédentes, dans laquelle l'angle de dépouille nominal (α) en tout second point (P2) le long de l'arête de coupe (7) est déterminé comme suit : $α = arctan \left(tan{α}_{max}⋅cosθ\right) ,$ dans laquelle αₘₐₓ est l'angle de dépouille au premier point (P1) et θ est l'angle aigu entre une tangente (t2) à l'arête de coupe (7) au second point (P2) et une tangente (t1) à l'arête de coupe (7) au premier point (P1).

12. Plaquette de coupe selon l'une quelconque des revendications précédentes, dans laquelle la plaquette de coupe (1) est indexable et comprend une arête de coupe supplémentaire (9) qui est disposée dans le premier plan (P), dans laquelle les deux arêtes de coupe (7, 9) présentent des profils d'arête de coupe identiques et sont disposées l'une en face de l'autre.

13. Plaquette de coupe selon l'une quelconque des revendications précédentes, dans laquelle la seconde face (3) comprend une ou plusieurs structures d'engagement (15) qui sont disposées pour s'engager avec des structures d'engagement complémentaires (17) dans une surface inférieure d'un logement de plaquette (12) d'un corps d'outil d'usinage motorisé (10) afin de positionner la plaquette de coupe dans le logement de plaquette (12) et d'empêcher le mouvement de la plaquette de coupe dans un plan de la surface inférieure du logement de plaquette (12).

14. Plaquette de coupe selon la revendication 13, dans laquelle la ou les structures d'engagement (15) comprennent une ou plusieurs rainures et les structures d'engagement complémentaires (17) comprennent une ou plusieurs nervures, ou inversement, dans laquelle la ou les rainures ou la ou les nervures dans la ou les structures d'engagement (15) comprises dans la seconde face (3) de la plaquette de coupe (1) sont disposées pour coopérer avec la ou les nervures ou la ou les rainures des structures d'engagement complémentaires (17) dans la surface inférieure du logement de plaquette (12).

15. Outil d'usinage motorisé comprenant un corps d'outil (10) ayant un bord périphérique (11) situé dans un premier plan de référence (RP1) s'étendant perpendiculairement à un axe central (C) autour duquel le bord (11) est symétrique en rotation, le bord (11) comprenant une pluralité de logements espacés tangentiellement (12), dans lequel une plaquette de coupe (1) selon l'une quelconque des revendications 1 à 14 est montée dans chacun de la pluralité de logements (12), dans lequel chaque logement (12) de la pluralité de logements (12) est disposé dans le corps d'outil (10) de telle sorte qu'une ligne d'intersection (14) entre la première face (2) de la plaquette de coupe (1) montée dans le logement (12) et un second plan de référence (RP2) contenant l'axe central (C) de l'outil d'usinage motorisé et le premier point (P1) de l'arête de coupe (7) de la plaquette de coupe (1), forme un angle radial (γ) avec le premier plan de référence (RP1), dans lequel l'angle radial (γ) correspond à la valeur maximale (αₘₐₓ) de l'angle de dépouille nominal de la plaquette de coupe (1).
